# EUROPEAN PATENT APPLICATION

(11) **EP 2 653 333 A1**
(43) Date of publication of application: **23.10.2013**
(21) Application number: 12164681.4
(22) Date of filing: 19.04.2012
(51) Int. Cl.: B60K 15/077

(54) **Fuel tank with flexible baffle for limiting fluid flow in one direction**

(71) Applicant: Inergy Automotive Systems Research (Société Anonyme), 1120 Bruxelles (BE)
(72) Inventor: Hill, David, COMMERCE TOWNSHIP, MI Michigan 48382 (US); Savone, Joe, Amherstburg, Ontario N9V3P2 (CA); Spadafora, Antonio, Windsor, Ontario N8N 4A5 (CA); Booth, Neall, Windsor, Ontario N9J3S2 (CA)
(74) Representative: de la Bigne, Guillaume Michel Marie

(57) **Abstract**

A fuel tank with a baffle that has a flexible hinge and a sealing surface composed of the interior of the tank, which limits the amount of fuel flow in a defined direction as a result of dynamic driving.

## Description

The present invention concerns a fuel tank with a baffle that has a flexible hinge and a sealing surface composed of the interior of the tank, which limits the amount of fuel flow in a defined direction as a result of dynamic driving. Baffle allows flow in said direction due to vertical movement of the fuel during a refueling event, via a gap between the baffle and said sealing surface in the baffle's natural position. Horizontal fuel flow would cause the baffle surface to contact the sealing surface and significantly reduce fuel flow from one side of the baffle to the other.

Rear wheel drive fuel systems commonly use saddle shaped tanks to store fuel in the vehicle. One of the inherent problems associated with a saddle shaped fuel tank is the fact that it has two distinct pockets for holding fuel. This requires two of each of the key features that go inside a fuel tank, including but not limited to, fuel pickups, fuel level sensors and venting valves. While fuel can be removed rather easily from the tank using 2 fuel pickups, filling both sides separately is not technically feasible. In certain cases, the required amount of fuel in the tank does not exceed the height of the tunnel on the interior, effectively known as the spillover point. In these cases, when the system is refueled, fuel is pumped into the primary side until it spills over into the secondary side. Since the maximum volume of fuel when divided equally between the two pockets is below this spillover point, the shutoff point for the refueling processes is on the secondary pocket, and is substantially lower than the spillover point.

During normal driving, fuel can slosh from one pocket to the other somewhat freely, causing the fuel levels to equal out somewhat. In rare cases however, a sustained turn in the direction of the primary side causes fuel to rush to the secondary side, allowing the fuel on the secondary side to be above the shutoff point. Given ample driving time, the secondary pickup transfers the fuel back to the primary side, however if this maneuver takes place going into a refueling station, the vehicle becomes unable to be refueled, even though the volume of fuel in the tank is near rated capacity.

Current solutions include the use of a larger secondary fluid pickup flow, to quickly remedy the imbalance of fuel. This larger flow creates increased pump current and ultimately impacts fuel economy on the vehicle. This is usually coupled with a baffle that is molded in to divert some of the fuel flow from going directly to the secondary side of the tank. These solutions must generally be used in tandem to effectively solve the problem.

Another solution is to add a second refueling valve to allow refueling in these situations. This second valve however creates an additional large orifice vapor path which can negatively impact refueling characteristics as well as increase the risk of liquid entering the fuel line. In addition the second valve has a fixed point. This means that the amount of fuel allowed to be added to the tank is still variable in these situations, as there is no way to tell how far above the shutoff point the fluid level in the secondary side is precisely.

Both solutions above represent tradeoffs in the functionality of the system and are potentially substantially more expensive than the disclosed invention.

These drawbacks are avoided by the present invention which uses a (preferably flexible) baffle that selectively allows fluid to travel from one chamber to the next.

Hence, the present invention concerns a tank comprising a primary chamber and a secondary chamber which are connected together in a communicating manner by means of a bridge, said tank including a baffle able to move from one position in which it allows liquid to be transferred from the primary chamber to the secondary chamber through the bridge, to another position in which said transfer is prevented.

In the broadest scope of the invention, the adjectives "primary" and "secondary" are merely aimed at distinguishing the 2 chambers of the tank from one another and they have no particular meaning related to their volume, location, contained accessories etc.

Preferably, the tank of the invention is made of plastic. More preferably, said tank includes at least one layer of high density polyethylene (HDPE), preferably an external layer i.e. a layer in contact with the atmosphere inside or outside (surrounding) the tank. Multilayer tanks including an internal layer made of barrier plastic (preferably made of ethylene vinyl alcohol copolymer (EVOH)) and two external layers of HDPE on both sides thereof (with an adhesive in between each layer) are commonly available and give good results within the frame of the invention.

The tank of the invention may contain any liquid. In particular, the liquid may be a fuel, a fuel additive, a reducing agent (for reducing nitrogen oxides (NOx) in exhaust gases), a brake fluid or a lubricant. More particularly, the liquid is a fuel. The tank may be intended for any "moveable" use (i.e. implying it to move), especially for equipping a vehicle and even more especially for equipping a motor vehicle.

Generally, the bridge of the tank according to the invention provides an exterior concavity which is intended to provide accommodation for drive, spare wheel and/or exhaust components of the vehicle to pass freely there through.

Saddle fuel tanks, as most of the fuel tanks for motor vehicles, are nowadays generally provided with a venting circuit. This circuit, which generally comprises venting valves and lines, allows air to be introduced into the tank in the event of under pressure (especially for compensating for the volume of liquid consumed) or allows the gases contained in the tank to be removed in the event of overpressure (especially in the event of overheating). This circuit also allows the ducting and possible filtering of the gases that have to be discharged into the atmosphere, for the purpose of meeting the ever stricter environmental requirements in this regard.

The venting circuit generally includes a valve of the ROV (roll over valve) type which as far as possible prevents liquid from coming out of the tank in the event of said tank rolling over or being at an excessively high angle of inclination. This valve must also respond rapidly and reliably when its intervention conditions occur, but with minimum sensitivity to abnormal phenomena such as especially a very high flow rate, overpressure in the tank or low amplitude waves. This type of valve thus includes a vent function, a roll-over function and a liquid discrimination function.

The venting circuit may also include a valve of the FLV (fill limit valve) type which sets the maximum filling level of the tank. It provides thus the fill-limit function.

Some valves provide the functions from both an ROV and from a FLV. They are called FLVV (fill limit vent valve).

In one embodiment of the invention, the tank comprises a valve, preferably of the FLVV type, and which is preferably located in the secondary chamber, especially in the case said chamber is filled by overflow of the primary chamber through the bridge.

In another embodiment of the invention, the tank comprises a filler pipe allowing the tank to be filled and which ends into the primary chamber. Generally, during the filling of such a tank, the primary chamber is first filled and then, the secondary one is filled by overflow through the bridge.

These two embodiment are preferably combined and in that case, the (preferably FLVV) valve is preferably communicating with the secondary chamber (for venting purposes i.e. allowing gases present in the chamber to be vented), while the primary chamber comprises the filler pipe.

Saddle tanks also generally include a transfer system that is in charge of transferring the liquid from one chamber to the other, the second one generally being the one in which a pump (aiming at supplying the liquid, generally fuel, to a device which uses it, generally a motor or engine). This transfer system is continuously active as soon as the liquid pump is active, which generally means as soon as the contact is on.

Preferably, the pump is located in the primary chamber, in which also preferably the filler pipe ends.

Hence, in a preferred embodiment, the transfer system transfers liquid from the secondary chamber to the primary chamber.

The above mentioned are preferably combined i.e. in a preferred aspect, the tank of the invention comprises a filler pipe and a pump in the primary chamber, a valve in the secondary chamber and a transfer system that transfers liquid from the secondary chamber to the primary chamber.

The invention solves the problem of rapid fuel flow from making a hard right turn into a gas station causing all the fuel to rush to the left side of the tank. In this case, if the filler pipe is on the right side of the vehicle and the shutoff valve on the left, the vent can be closed preventing fuel from being put into the tank, despite the fact that there is not a full tank of fuel. The solution blocks the fuel flow.

The major functional difference between the invention and the prior art solutions is the movability of the baffle, which allows it to perform its function without compromising other aspects of the fuel system.

The invention provides a low cost, low power consumption, low noise solution for issues with refueling after inducing a substantial centrifugal force on the fuel system.

Its advantages are namely:
- No power consumption
- A component that is relatively inexpensive to make.
- No risk of adding tank rigidity with a baffle attached to the top and bottom of the tank.

To these ends, the present invention uses a baffle, i.e. a device that regulates the flow of the liquid contained in the tank. Preferably, this baffle is a plate like piece (i.e. having one dimension (its thickness) substantially smaller than its two other dimensions). This baffle must not necessarily by flat; it may be curved and/or comprise a portion of any overall shape (waved, corrugated...). Also, the thickness of the baffle may not be constant but instead, it may vary from one portion to another or even, in a continuous manner.

Preferably, the baffle is at least partly made of the same material as the fuel tank or an accessory fixed inside of it, so as to be able to be fixed to the tank wall, or to said accessory, by welding. Hence, if the tank is made of plastic and/or comprises at least one internal plastic accessory, the baffle is at least partly made of the same plastic. More specifically, if the tank comprises at least one external layer made of HDPE and/or an accessory made of HDPE fixed inside of it, the baffle comprises at least one portion made of HDPE.

According to the invention, the baffle is moveable between two different positions. To this end, the baffle is preferably equipped with a hinge i.e. a jointed or flexible device that allows the turning or pivoting of said baffle, generally about the axis of symmetry of said hinge. In that embodiment, the hinge is preferably at least partly made of the same material as the tank i.e. generally a plastic and more specifically: HDPE. Alternatively, said hinge may be fixed/integrated to a piece made of the same material as the tank.

According to the invention, the two above mentioned positions are respectively one position in which it allows fluid to be transferred from the primary chamber to the secondary chamber through the bridge, to another position in which said transfer is prevented. Preferably, the geometry and location of the baffle are such that a thrust against said baffle by fluid travelling from the secondary chamber to the primary one, effectively allows fluid transfer from chamber to chamber, while a thrust against the baffle by fluid travelling from the primary chamber to the secondary one, prevents said fluid transfer.

To this end, it is preferable that the lower end of the baffle is able to "seal" against the wall of the tank, preferably on or close to the bridge, in case of a thrust by fluid travelling from the primary chamber to the secondary one or via the centrifugal force acting on the baffle due to the maneuver. Preferably, when the baffle is at rest, the transfer of liquid from the primary chamber to the secondary one is allowed, namely for allowing the secondary chamber to be filled if the filler pipe is located in the primary chamber, while once the baffle is pushed against the bridge wall, said transfer is prevented preferably almost completely. The desired maximum flow rate across the tunnel would be roughly 2-4 liters per minute, as to keep the flow equal or less than that of the transfer pump, although as it is generally known that such maneuvers are brief, it could be imagined that a leak rate of 10-15 liters per minute is acceptable.

Hence, the baffle of the tank of the invention is generally located in the primary chamber, close to the bridge. More specifically: it is preferably fixed to the internal upper tank wall (or fixed/integrated to an accessory fixed there), more preferably of the primary chamber close to the bridge so that the lower end of the baffle is able to impede the travel of the liquid from the primary to the secondary chamber through said bridge.

This embodiment (where the baffle is located in the primary chamber, close to the bridge) is preferably combined with the embodiments set forth above. Hence, in a preferred aspect, the tank of the invention comprises a filler pipe and a pump in the primary chamber, a valve in the secondary chamber and a transfer system that transfers liquid from the secondary chamber to the primary chamber, the baffle being located in the primary chamber, close to the bridge.

In a preferred embodiment of the invention, the perimeter of the baffle and/or the tank wall in the region where the baffle is fixed, are/is provided with a sealing surface, which may be an additional part of different material and/or geometry, or a part molded as one piece with these elements but having a different thickness and/or geometry so as to enhance the sealing of the baffle against the tank wall.

The invention will now be described more in detail and in a non limiting manner based on the Figures attached who intend to depict some embodiments of it.

Figures 1 to 4 are schematic views of a vertical cut through a same tank in different fill level conditions; figs. 1, 2 and 4 show embodiments of the present invention while fig. 3 relates to a prior art tank, without baffle.

Figures 5 to 10 show a cut through a similar tank, but in a 3D version and through a plane perpendicular to the one of the cuts of Figs. 1 to 4. They all show different embodiments of the invention implemented in said tank.

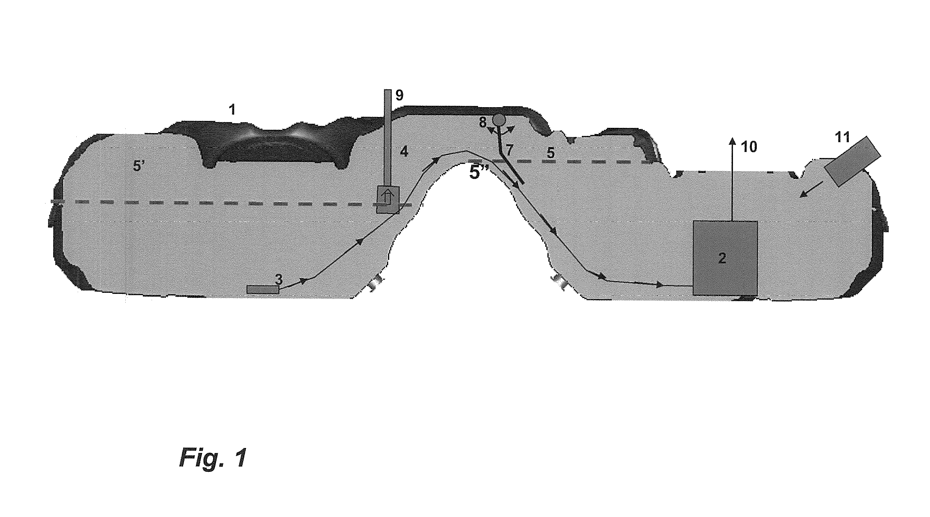

Figure 1 depicts the system after a normal refueling event. The fuel tank shell is comprised of 2 distinct pockets on the left and the right with a tunnel area (or bridge) dividing the two. In a normal refueling event, fuel is poured into the tank via a filler pipe (11) and proceeds to fill the right pocket (which corresponds to the primary chamber in the above description) to a level (5) before spilling over the tunnel (or bridge) and filling the left pocket (which corresponds to the secondary chamber in the above description). Since the total volume of fuel allowed in the tank is less than the amount of fuel required to be above the level of the tunnel, a vent valve on the left side (4) is placed at level (5') substantially lower than the height of the top of the tunnel (5") to ensure the proper fuel volume in the tank. When the fuel level (5') reaches the shutoff point of the valve (4), a vent passage (9) is blocked, preventing airflow out and consequentially fluid flow into the tank via the filler pipe (11). As a result the refueling event ends. Figure 1 also depicts one embodiment of the invention in the form of a flexible baffle (7) hinged at the top (8), that in its normal position leaves a defined clearance to the tank wall (1). The baffle (7) is biased to the right side of the tank. This planned clearance allows fuel to spill from the right side of the tank to the left during a normal refueling process.

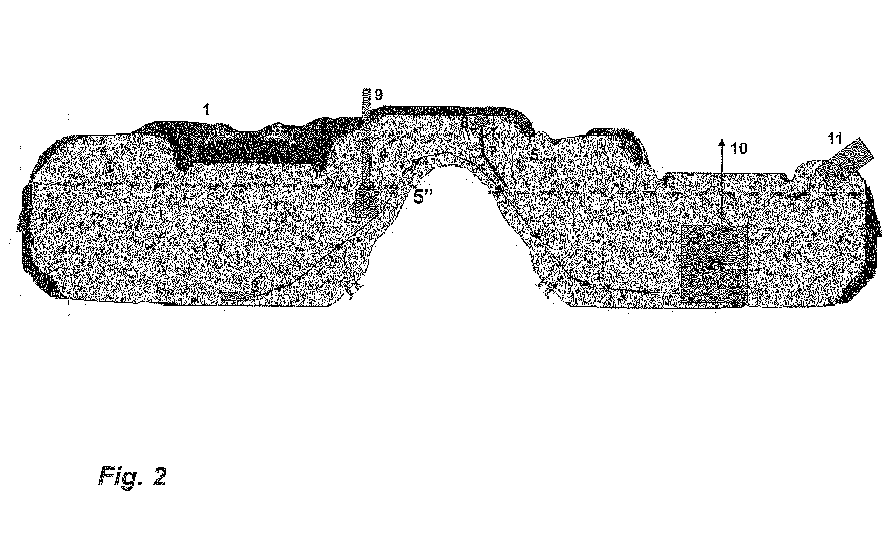

Figure 2 depicts how the fluid level on the right (5) and left (5') can equalize during driving. In addition it can be seen that a secondary pickup (3) (which corresponds to the transfer system of the above description) transfers fuel from the left side of the tank to the fuel reservoir (2) on the right side of the tank which is then transferred to the engine via a fluid line (10) through a pump included in said reservoir but not shown. This fluid flow promotes the emptying of the left side of the tank prior to the right side of the tank. This in-turn allows for proper refueling when the tank (1) is empty.

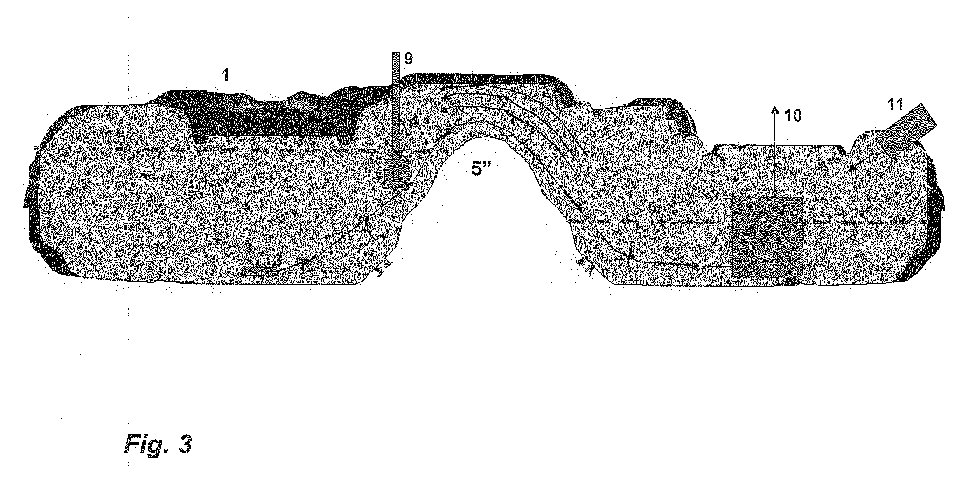

Figure 3 depicts the prior art and the situation in which the fluid from the right side of the tank (5), is forced rapidly via centrifugal forces to the left side of the tank resulting in a fuel level on the left side of the tank (5') that is above the shutoff height of the valve (4) and a fuel level on the right (5) that is nearly empty. In normal operation, the secondary pickup (3) is used to re-equalize this. The designed flow rate of this transfer line, dictates how quickly the tank will equalize. Since the transfer flow is based on a parasitic loss of the fuel pump, it is preferred to minimize the amount of flow from the pickup (3) to the fuel module (2). In a situation however where the centrifugal force is induced directly prior to an attempt to refuel the vehicle, there is not ample time to transfer enough fuel from the left to the right. This causes a condition where the tank is not full by design, but is unable to be filled since the vent passage (9) is blocked.

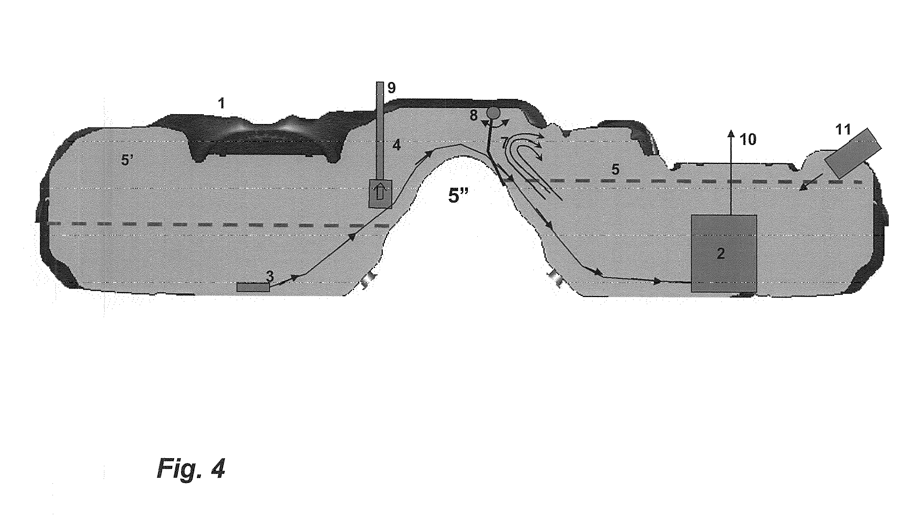

Figure 4 shows one embodiment of the invention, in which a baffle (7) with a hinge point (8) (or axis when referring to the above description) is placed in the region between the left and right pocket, biased toward the right pocket. Normally there is a defined clearance between the tank (1) and the baffle (7) surfaces. In the case that centrifugal force induces rapid fuel flow, the baffle (7) is forced against the tank wall (1) effectively sealing the left side of the tank from the right side of the tank.

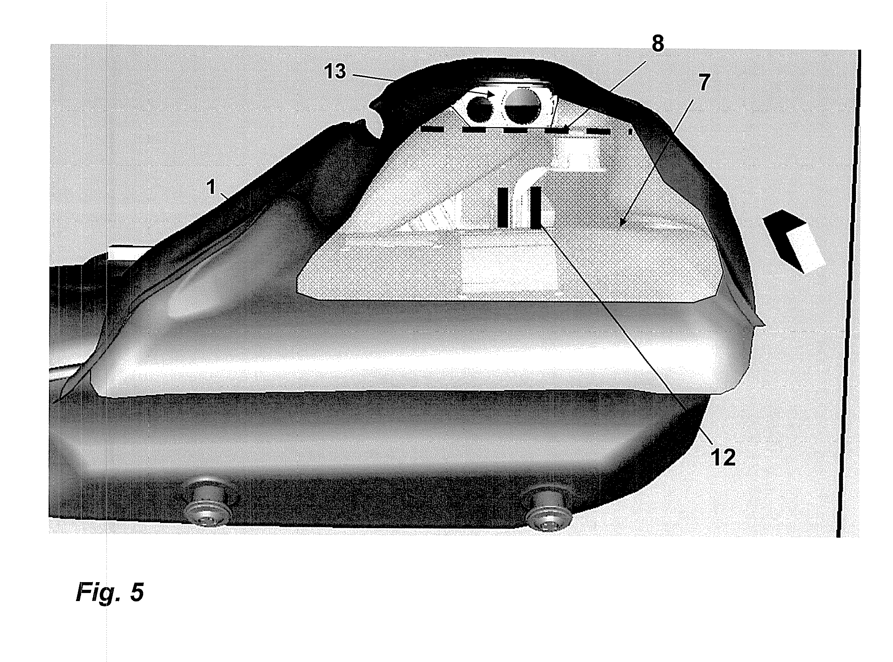

Figure 5 shows a side view of one embodiment. In this preferred embodiment the baffle 7 is of one piece of polyethylene, and is integrated into the line retaining device (13) normally displaced in the tank i.e. a piece intended to fix venting and/or electrical lines inside the tank. A living hinge (8) allows the lower portion of the baffle (7) to be mobile, to facilitate the selective communication between the pockets of the fuel tank (1). One additional feature is included to the baffle (7). This feature is a retaining clip (12) that can be used during the moulding process to hold the baffle (7) stable relative to the interior of the tank. This is an advantage since the baffle is made of the tank material and without constraint during the moulding process, the baffle (7) could stick to the interior of the tank (1).The clip is attached to one of the venting lines disposed on the interior of the tank during the moulding process. This venting line is substantially rigid and is designed to have ample clearance to the tank walls. As such it makes for a suitable fixation point for clipping the baffle (7) to avoid contact to the tank wall.

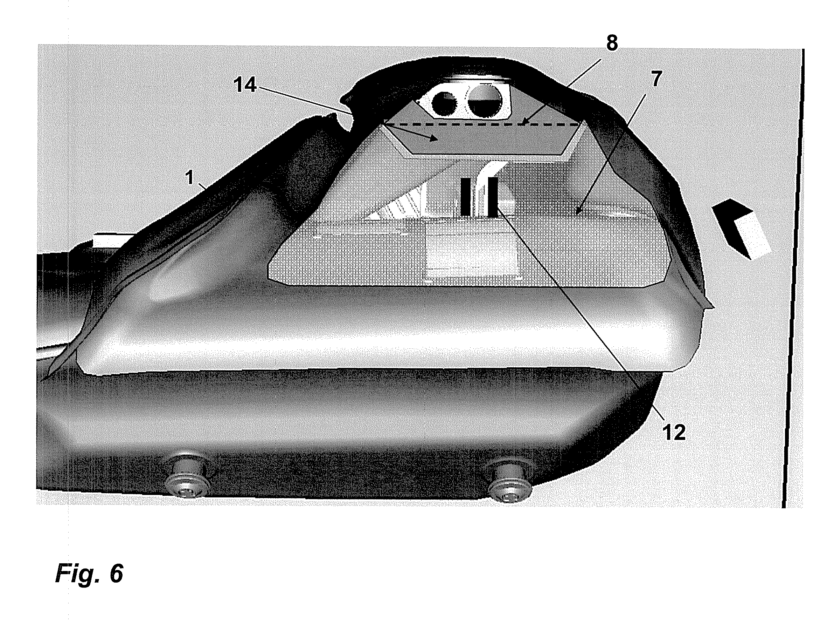

Figure 6 shows another embodiment of the invention, in which the baffle (7) is made of a material other than polyethylene to take advantage of properties of other polymers including dimensional stability. In this embodiment the living hinge (8) is disposed on an intermediate piece (14) that is made of polyethylene, allowing for the living hinge (8) and the ability to weld the component (7,14) to the tank (1). Another version of this concept could be designed to have the living hinge (8) on the lower baffle portion (7) due to material properties of another polymer being superior for living hinges.

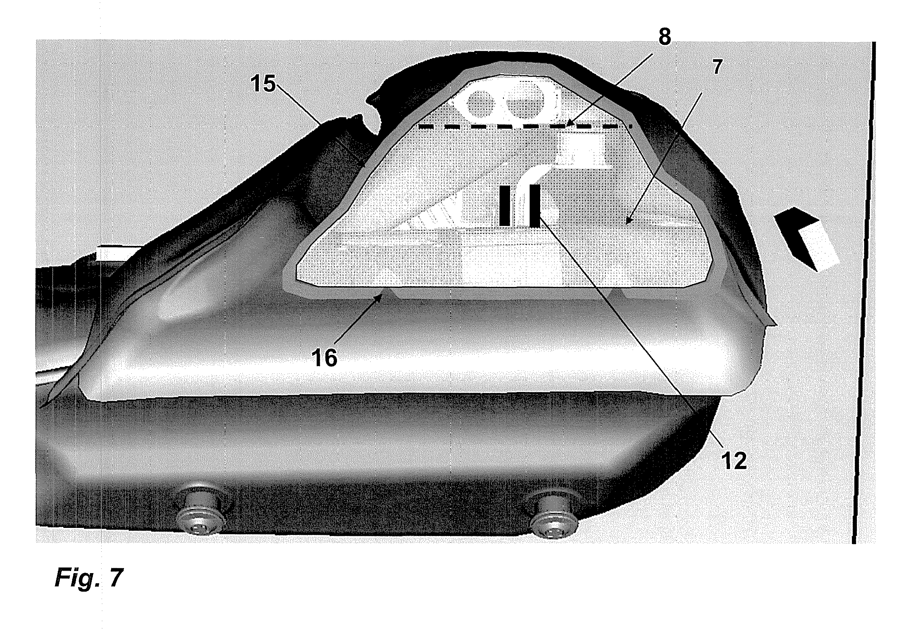

Figure 7 shows yet another embodiment of the invention. In this embodiment a frame (15) is disposed in the tank. This frame (15) could be a separate component or formed as a shape into the tank wall (1) This frame defines a sealing surface for the baffle (7) to ensure minimal flow from one side of the tank (1) to the other during lateral slosh situations. As an alternative to a continuous frame to seal to, small nubs (16) could be used to limit the travel of the baffle (7) in the direction of the secondary pocket.

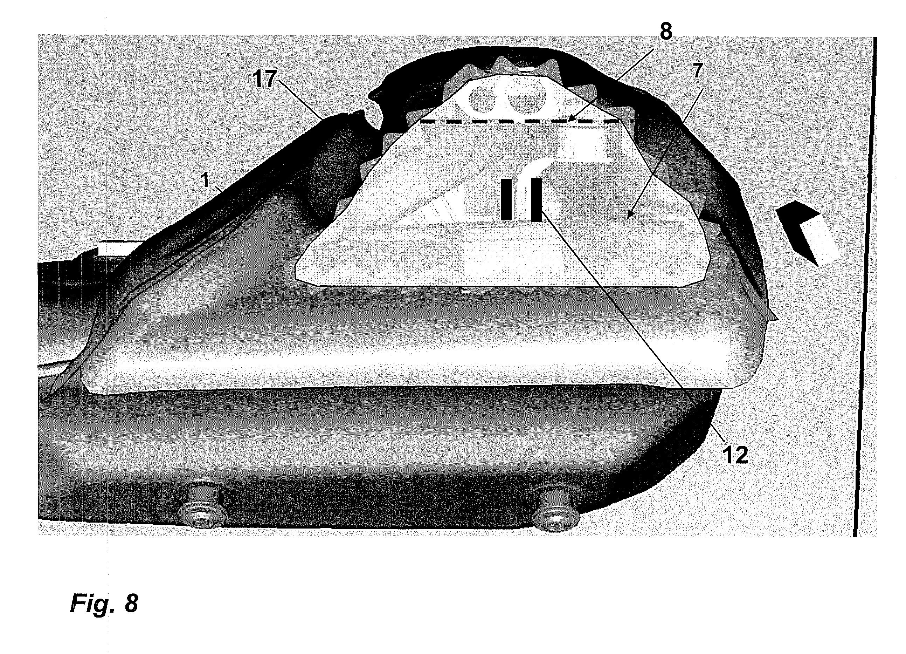

Figure 8 shows a potential improvement to figure 7, in which the outer frame (17 is corrugated to allow it to conform to the interior of the tank (1) during the moulding process.This corrugation also provides an advantage of flexibility in the event of a crash at low temperature. The corrugation has the disadvantage of inherently having a leak path through the folds. Depending on the design and the desired flow rate however, this could offer a means to create a sufficiently thick interface between the tank wall (1) and the profile of the baffle (7) in the case that the shape of the tank wall (1) is sufficiently complex, resulting in the potential interference between the tank wall 1 and the baffle. The average thickness of the interface piece (17) could be relatively thin, to support moulding and flexibility, while still offering the proper interface characteristics.

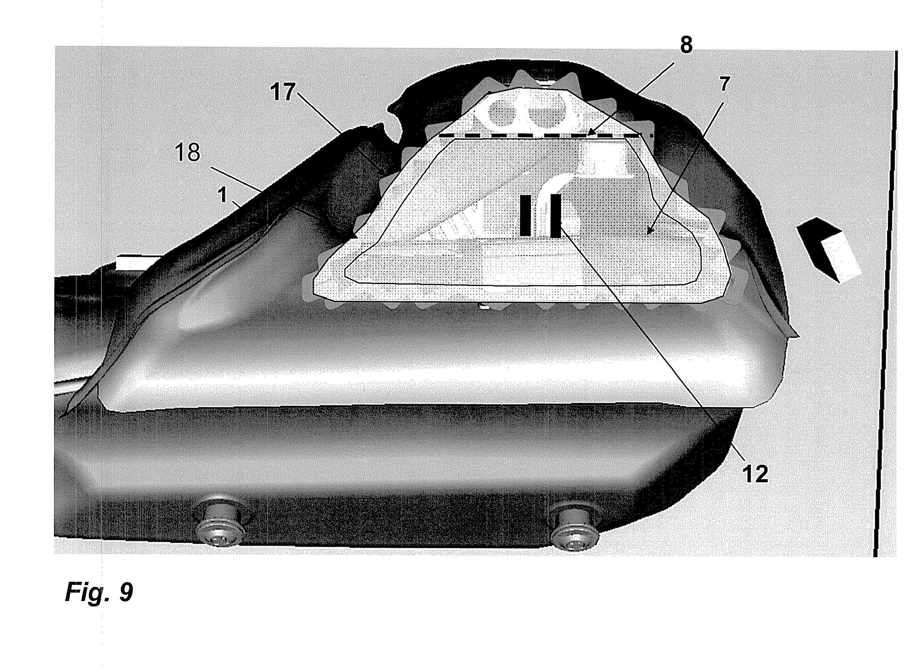

Figure 9 shows another potential improvement to the design, in which the perimeter (18) of the baffle (7) is intentionally thinner than the rest of the baffle (7) as to conform better to the tank (1) or framework (15.17), as well as minimize the amount of noise transmission.

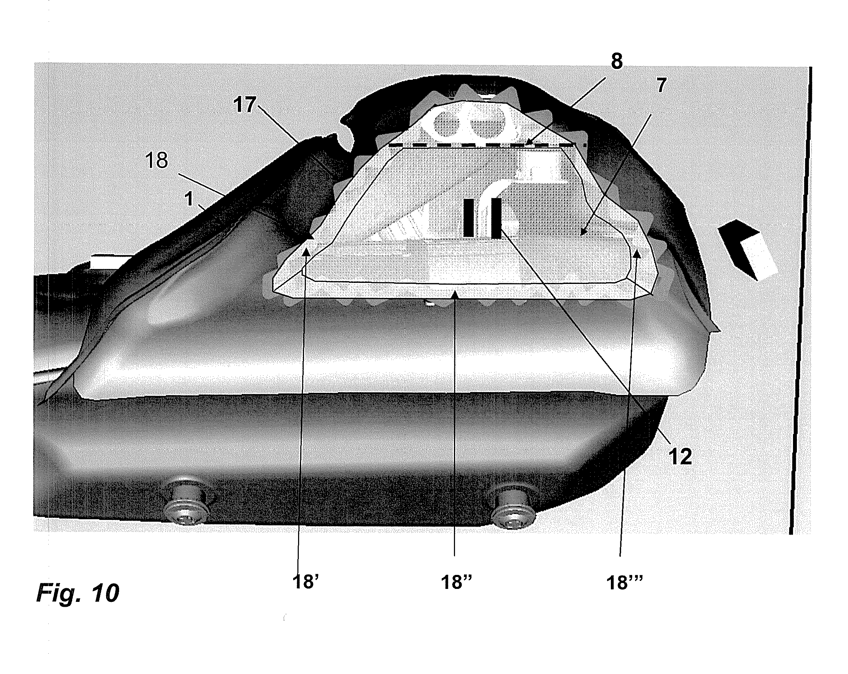

Figure 10 shows an improvement to figure 9 in which the perimeter (18) of the baffle (7) is sectioned into 3 pieces (18', 18", 18"') to promote additional flexibility. Another means of doing this is to create a subtle corrugation in the perimeter (18) of the baffle (7).

## Claims

1. Tank comprising a primary chamber and a secondary chamber which are connected together in a communicating manner by means of a bridge, said tank including a baffle able to move from one position in which it allows fluid to be transferred from the primary chamber to the secondary chamber through the bridge, to another position in which said transfer is prevented.

2. Tank according to the preceding claim, comprising a valve communicating with the secondary chamber.

3. Tank according to the preceding claim, wherein the valve is a FLVV (fill limit vent valve).

4. Tank according to any of the preceding claims, comprising a filler pipe which ends into the primary chamber.

5. Tank according to any of the preceding claims, comprising a transfer system in charge of transferring liquid from one chamber to the other.

6. Tank according to the preceding claim, comprising a pump located in the primary chamber and wherein the transfer system transfers liquid from the secondary chamber to the primary chamber.

7. Tank according to any of the preceding claims, said tank being made of plastic and/or comprising at least one internal plastic accessory, wherein the baffle is at least partly made of the same plastic as the tank and/or accessory.

8. Tank according to any of the preceding claims, wherein the baffle is equipped with a hinge.

9. Tank according to the preceding claim, wherein the hinge is at least partly made of the same material as the tank, or is fixed/integrated to a piece made of the same material as the tank.

10. Tank according to any of the preceding claims, wherein the geometry and location of the baffle are such that a thrust against said baffle by fluid travelling from the secondary chamber to the primary one or by centrifugal force acting to push the baffle in the direction of the primary chamber, effectively allows fluid transfer from chamber to chamber, while a thrust against the baffle by fluid travelling from the primary chamber to the secondary one or by centrifugal force acting to push the baffle in the direction of the secondary chamber, prevents said fluid transfer.

11. Tank according to the preceding claim, wherein the baffle has a lower end able to seal against the wall of the tank, preferably on or close to the bridge, in case of a thrust by fluid travelling from the primary chamber to the secondary one or by centrifugal force acting to push the baffle in the direction of the primary chamber

12. Tank according to the preceding claim, wherein, when the baffle is at rest, the transfer of liquid from the primary chamber to the secondary one is allowed, namely for allowing the secondary chamber to be filled by overflow from the primary chamber, while once the baffle is pushed against the tank wall, said transfer is prevented.

13. Tank according to the preceding claim, wherein the baffle is generally located in the primary chamber, close to the bridge and is fixed to the internal upper tank wall, or fixed/integrated to an accessory fixed there.

14. Tank according to any of claims 11 to 13, wherein the perimeter of the baffle and/or the tank wall in the region where the baffle is fixed, are/is provided with a sealing surface.

15. Use of a tank according to any of the preceding claims, for storing fuel.
